# EUROPÄISCHE PATENTSCHRIFT

(11) **EP 3 456 662 B1**
(45) Veröffentlichungstag und Bekanntmachung des Hinweises auf die Patenterteilung: **29.05.2024**
(21) Anmeldenummer: 18192377.2
(22) Anmeldetag: 04.09.2018
(51) Int. Cl.: B65G 1/04

(54) **SCHIENENGEBUNDENER TRANSPORTROBOTER MIT HUBPLATTFORM**
TRACK-BOUND TRANSPORT ROBOT WITH LIFTING PLATFORM
ROBOT DE TRANSPORT FERROVIAIRE POURVU DE PLATEFORME DE LEVAGE

(30) Priorität: 19.09.2017 DE 102017121638
(43) Veröffentlichungstag der Anmeldung: 20.03.2019
(73) Patentinhaber: Heron Innovations Factory GmbH, 6850 Dornbirn (AT)
(72) Erfinder: Beer, Christian, 6858 Schwarzach (AT)
(74) Vertreter: Riebling, Peter

(56) Entgegenhaltungen:
- EP-A1- 2 826 731
- WO-A1-2010/080539
- DE-U1-202007 000 874
- JP-A- H04 235 822
- JP-A- H11 278 607
- US-A- 4 088 232
- US-A1- 2009 229 498
- US-A1- 2014 277 693
- US-A1- 2016 060 037
- US-B1- 8 628 289

## Beschreibung

Die Erfindung betrifft die Verwendung eines schienengebundenen Transportroboters mit Hebezeug sowie ein Regallager mit einem schienengebundenen Transportroboter mit Hebezeug nach dem Oberbegriffen der unabhängigen Patentansprüche 1 und 10.

Ein schienengebundener Transportroboter ist beispielsweise mit dem Gegenstand der DE 10 2007 022 484 A1 bekannt geworden. In dem dort gezeigten, selbstfahrenden Transportroboter ist eine mittige Ausnehmung für den Eingriff eines dort angeordneten Hebezeuges vorgesehen, um zu erreichen, dass der Transportroboter an einer beliebigen Schienenposition des Transportroboters das mit ihm verbundenen Hebezeug eine Last aufnehmen kann und am Hebezeug hängend an einen anderen Platz verbringen kann.

Nachteil der bekannten Anordnung ist jedoch, dass das Hebezeug stets auf die Art und das Format des zu transportierenden Ladegutes angepasst sein muss und es nicht möglich ist, Ladegüter unterschiedlichen Formats oder Stückgüter, wie z. B. Flaschen, Dosen, Gebinde, Kartons und dergleichen individuell zu transportieren.

Weiterer Nachteil dieser Druckschrift ist, dass das Hebezeug ständig mit dem Ladegut im Eingriff sein muss und das Ladegut nur von oben halten kann, was mit einer Einschränkung der Betriebsweise verbunden ist.

Es ist nicht möglich, mit dem Hebezeug mehrere Ladegüter der eingangs genannten Art zu vereinzeln, weil stets nur ein Ladegut dem Hebezeug zugeordnet werden kann.

Ebenso ist es bei dem bekannten Transportroboter nicht möglich, das mit dem Hebezeug aufgenommene Ladegut quer zur Hubrichtung in bestimmter Weise abzuladen, zu vereinzeln oder zu stapeln.

Mit dem Gegenstand der DE 101 52 019 A1 ist eine Hubplattform bekannt geworden, die jedoch nicht an einem selbstfahrenden Transportroboter angeordnet ist. Aus diesem Grund ist der Einsatzbereich eines solchen Hubwerkzeuges begrenzt.

Mit dem Gegenstand der WO 2014/090684 A1 ist ein weiterer, schienengebundener Transportroboter bekannt geworden, der an seiner Unterseite eine Hubplattform trägt, die mit einer Ladezange ausgerüstet ist.

Die Hubplattform ist jedoch nur zur Aufnahme von genau auf das Format der Ladezange abgestimmtes Stück- oder Ladegut geeignet und ist nicht an unformatierte Lade- oder Stückgüter anpassbar. Ebenso ist eine seitliche Ablage oder ein seitliches Verfahren von aufgenommenem oder abgegebenem Stückgut nicht möglich.

Die gleiche Kritik gilt auch für ein Hebezeug, das Gegenstand der WO 2014/075937 A1 ist, weil dort lediglich ein Hubwerkzeug an vertikalen Schienen angeordnet ist, welches einen Ladekorb aufweist, in den Waren eingeladen werden können.

Ein Lademittel für die Beladung des Ladekorbs ist nicht dargestellt. Ebenso ist eine seitliche Vereinzelung des aufgenommenen Ladegutes nicht möglich.

Ein ähnlicher Gegenstand ist auch mit der KR 100930811 B1 dargestellt, weil dort lediglich eine Hubplattform an einem Hubrahmen angeordnet ist, auf der beispielsweise ein Fahrrad abgestellt ist. Eine seitliche Vereinzelung oder eine formatunabhängige Aufnahme von Ladegut ist mit dieser Druckschrift nicht gezeigt.

Die JP H11 278607 A offenbart ein reines Regalbediengerät, wobei ein Transportroboter, welcher auf Rollen verfahrbar ist, auf den Schienenbahnen eines Regallagers verfahrbar ist. Der schienengebundene Transportroboter weist ein Hebezeug auf, das in einer Ausnehmung des Transportroboters in vertikaler Richtung heb- und senkbar angeordnet ist und zur Aufnahme eines Ladegutes geeignet ist und die Regalgasse zwischen den Lagerreihen transportschlüssig miteinander verbinden. Das Hebezeug ist als heb- und senkbar angetriebene Ladeplattform mit mindestes einem darauf angeordneten Längsförderer ausgebildet.

In der Lageöffnung des schienengebundenen Transportroboters sind seitliche Hydraulikzylinder angeordnet, welche mit der Ladeplattform verbunden sind. Die Ladeplattform kann deshalb in vertikaler Richtung aus dem Laderaum des Transportroboters nach unten abgefahren werden und wieder in den Laderaum eingefahren werden. Es handelt sich also um eine reine Hubbewegung, die diese Ladeplattform ausführen kann.

Mit dieser Ladeplattform und den daran angebundenen Hebevorrichtungen, die als Hydraulikzylinder ausgebildet sind, besteht jedoch der Nachteil, dass man eine Kiste nur von oben ergreifen kann, was den Einsatzzweck eines derartigen Transportroboters stark einschränkt. Zudem kann es zu ungewollten Schwingungsbewegungen bei Ablassen der Ladeplattform kommen.

Der Erfindung liegt deshalb ausgehend von der JP H11 278607 A die Aufgabe zugrunde, einen schienengebundenen Transportroboter mit Hebezeug der eingangs genannten Art so weiterzubilden, dass eine erweiterte Betriebsweise möglich ist.

Zur Lösung der gestellten Aufgabe ist die Erfindung durch die technische Lehre der Ansprüche 1 und 10 gekennzeichnet.

Es wird bevorzugt, dass das Hebezeug nunmehr als Ladeplattform ausgebildet ist, auf der ein eigenes Lademittel angeordnet ist, welches in der Lage ist, das auf der Ladeplattform angeordnete Ladegut quer zur Hubrichtung zu befördern und zu vereinzeln.

Mit der gegebenen technischen Lehre ergibt sich der Vorteil, dass es nun erstmals möglich ist, mit einem schienengebundenen Transportroboter eine Ladeplattform zu betreiben, die es ermöglicht, eine horizontale Ladeebene zu bilden, auf der ein formatunabhängiges Ladegut, z. B. in Form einer Kiste, eines Kartons, einer Flasche, von Dosen, von Gebinden und dergleichen aufgeladen werden kann, ohne dass es auf die Art eines Hubgreifers ankommt, wie er aus dem vorher genannten Stand der Technik bekannt ist.

Demnach bildet erfindungsgemäß die Hubplattform eine zum Aufladen von unformatiertem Stückgut geeignete Ladeplattform und nach dem weiteren Merkmal der Erfindung ist auf der Ladeplattform ein Lademittel angeordnet, welches in einer bevorzugten Ausgestaltung als Längsförderer ausgebildet ist.

Damit ergibt sich die Möglichkeit einen auf einer horizontalen Schienenbahn fahrenden Hubförderer mit einer vertikalen Verladung des Ladegutes und zusätzlich eine Querverladung des Ladegutes vorzusehen.

Unter dem Begriff "Längsförderer" werden alle auf der Ladeplattform angeordneten Förder- und Vereinzelungsmittel verstanden, die in der Lage sind, ein oder mehrere auf der Ladeplattform aufliegende unformatierte Ladegüter quer zur (vertikalen) Hubrichtung der Ladeplattform (seitlich) zu vereinzeln.

Erfindungsgemäß ist das Vereinzelungsmittel als Förderband ausgebildet, wobei in einer noch weiteren Ausführung dieses Förderband aus zwei zueinander parallelen und synchron angetriebenen Förderriemen, Zahnriemen oder Schnurriemen besteht.

In einer anderen nicht erfindungsgemäße Ausgestaltung kann dieses Fördermittel auch aus einem einzigen durchgehenden Förderband bestehen oder auch aus einem Kettenförderer, einem Seilförderer oder einem anderen Längsförderelement. In einer dritten Ausgestaltung kann es vorgesehen sein, dass in der Ladeplattform eine um eine horizontale Achse schwenkbare Klappe angeordnet ist, bei deren Öffnung ein auf der Ladeplattform aufgeladenes Schüttgut nach unten abgegeben werden kann.

In einer bevorzugten Ausgestaltung der Erfindung besteht der Transportroboter aus einem autonom fahrenden Gerät, welches elektronisch gesteuert selbsttätig auf der Schienenbahn Transportaufgaben erfüllt.

Vorteilhaft ist, dass auf dem Transportroboter eine Hubvorrichtung angeordnet ist, die im gezeigten Ausführungsbeispiel aus zwei zueinander parallel angeordneten und im gegenseitigen Abstand befindlichen Hubantriebskästen besteht, die links und rechts einer etwa mittigen Ausnehmung im Bereich des Transportroboters angeordnet sind.

In jedem Hubantriebskasten ist ein eigener Antriebsmotor mit einer zugeordneten Antriebswelle angeordnet und die Antriebswelle treibt beidseitig drehfest damit verbundene Wickeltrommeln an, über welche das Hubmittel gewickelt ist. In einer bevorzugten Ausgestaltung besteht das Hubmittel aus einem Hubband.

Statt einem Hubband können jedoch sämtliche anderen Arten verwendet werden, wie z. B. Seile, Ketten, Kugelketten, Riemen oder Rundschnüre und dergleichen.

Statt der Hubbänder und der anderen seilförmigen Hubelemente können auch Hubscheren oder dergleichen verwendet werden.

Wichtig ist jedenfalls, dass die Ladeplattform im Ruhezustand annähernd bodeneben in einer Ausnehmung des Transportroboters gelagert ist und dass auf den auf der Ladeplattform befindlichen Längsförderer das zu vereinzelnde Ladegut aufgeladen ist. Damit kann der Transportroboter das aufgeladene Ladegut an jede beliebige Stelle der Schienenbahn abgeben oder aufnehmen.

Ein solches Ladegut kann ein umformatiertes Stückgut (wie Flaschen, Dosen, Gebinde, Packungen) oder auch eine Kiste ein Karton oder ein Tray sein.

Der einfacheren Beschreibung wegen wird in der folgenden Beschreibung von einem Ladegut in der Form einer Kiste ausgegangen, obwohl die Erfindung hierauf nicht beschränkt ist.

Beim Absenken der Ladeplattform mit der aufgeladenen Kiste erfolgt die Absenkung soweit, bis die Oberkante der Ladeplattform bodeneben mit der Ablageebene eines seitlich daran anschließenden Ablageplatzes ist.

Hier liegt ein wesentlicher Unterschied zum Stand der Technik, denn beim Stand der Technik waren die Ablageplätze stets lotrecht unterhalb des Transportroboters angeordnet und nicht seitlich daneben.

Damit besteht der Vorteil, dass der Transportroboter in den Regalgassen eines Regallagers verfahren kann. Im Regallager sind spalten- und reihenweise übereinander gestapelte Kisten oder anders artiges Stückgut angeordnet. Damit ist der Transportroboter in der Lage, eine solche Transportkiste seitlich aus einer Lagerreihe herauszuziehen, aufzuladen und an einen anderen Ort zu verbringen.

Natürlich geht auch der umgekehrte Vorgang, dass eine Bestückung des Regallagers mit einer auf der Ladeplattform aufgeladenen Kiste oder dergleichen erfolgen kann.

Das Regallager besteht aus übereinander gelagerten Kisten, d. h. jede Kiste liegt auf einem Ablagepaneel auf, um so die Kisten gewichtsmäßig voneinander zu trennen und dafür zu sorgen, dass jeweils immer nur eine Kiste aus einer bestimmten Lagerreihe und Lagerspalte entnommen werden kann.

Die Erfindung sieht als weiteren Vorteil, dass die aus dem Regallager entnehmbaren Kisten auch nur ein halbes Format aufweisen können, d.h. es können zwei gleichformatige halbierte Kisten aus einem einzigen Ablageplatz des Regallagers auf die Ladeplattform des Transportroboters aufgeladen werden.

Es kann auch nur eine halbierte (oder gedrittelte oder geviertelte) Kiste oder Karton oder dgl. entnommen werden.

Selbstverständlich ist bei einer Halbierung derartiger Kisten auch eine andere Formatierung von derartigen Kisten, wie z. B. ein Drittel oder ein Viertel des Gesamtstückgutes möglich.

Bei allen Ausführungsformen ist wichtig, dass nun die Ablage und Aufnahme des Ladegutes seitlich unterhalb oder neben dem/des Transportroboters erfolgt und nicht mehr direkt lotrecht unter dem Transportroboter, was erfindungsgemäß den Einsatzbereich eines solchen erfindungsgemäßen schienengebundenen Transportroboters wesentlich erweitert. Dazu ist vorgesehen, dass der Längsförderer teleskopierbar ausgebildet ist. Das heißt, seine aktive Auszugslänge kann im Vergleich zu seiner Länge im Ruhezustand nahezu verdoppelt oder verdreifacht werden. Er kann deshalb in einer ersten Ausführung nur einfach teleskopierbar und in einer zweiten Ausführung auch doppelt teleskopierbar ausgebildet sein.

Gerade bei der eingangs genannten WO 2014/090684 A1 bestand der Nachteil, dass die Ladegüter des Regallagers gewichtsmäßig und reibschlüssig, sowie in Kontakt zueinander in Spalten aufeinander gestapelt waren, was mit dem Nachteil verbunden ist, dass die unterste Kiste oder das unterste Ladegut mit einer sehr hohen Druckkraft belastet war, was möglicherweise zur Verformung des Ladeguts führte.

Hier setzt die Erfindung ein, die nunmehr ein Regallager mit gewichtstechnisch voneinander getrennten und auf unterschiedlichen Ablagepaneelen lagernden Kisten oder anderen Ladegütern vorsieht, so dass es möglich ist, ein oder mehrere Ladegüter gewichtsunabhängig seitlich aus den Regalreihen herauszuziehen und auf die Ladeplattform aufzuladen.

Wenn beim Gegenstand der WO 2014/090684 A1 die unterste Kiste des Stapels vereinzelt werden soll, müssen alle anderen darüber liegenden Kisten entfernt werden, was gerade bei der Erfindung vermieden wird. Bei der Erfindung kann individuell auf jede Kiste auf einem bestimmten Regallagerplatz in einem Regallager zugegriffen werden. Eine solche Kiste wird seitlich vereinzelt und nicht in Hubrichtung.

Bei der Erfindung besteht der Vorteil, dass aufgrund der Hublänge zwischen dem Transportroboter und dem über das Hubwerkzeug verbundenen Ladeplattform die aufgeladene Last in verschiedenen vertikalen Ebenen horizontal (seitlich) abgeladen werden kann, was beim Stand der Technik nicht möglich ist. Dazu dient der in seiner Auszugslänge teleskopierbar ausgebildete Längsförderer.

Für die Steuerung der Ladeplattform mit dem dort angeordneten Schalt- und Kontrollelementen ist es in einer ersten Ausgestaltung vorgesehen, dass zwischen dem Transportroboter und der Ladeplattform eine Funkschnittstelle aktiv ist, welche die entsprechenden Stell- und Kontrollbefehle funkgestützt überträgt.

In einer anderen Ausgestaltung kann es vorgesehen sein, dass eine kabelgebundene Verbindung zwischen dem Transportroboter und der Ladeplattform vorgesehen ist.

Die kabelgebundene Verbindung kann auch in die Hubbänder verlegt werden oder parallel zu den Hubbändern verlaufen.

Die Erfindung sieht auch ein Verfahren zum Betrieb eines Transportroboters in einem Regallager vor, das aus im Abstand voneinander angeordneten Lagerreihen und dazwischen angeordneten Regalgassen besteht, wobei in den Lagerreihen eine Vielzahl von Lagerspalten definiert sind und eine Vielzahl von Ablageplätzen für Stückgut, insbesondere Kisten bilden, wobei der schienengebundene Transportroboter mit Hebezeug, das in einer Ausnehmung des Transportroboters in vertikaler Richtung heb- und senkbar angeordnet ist und zur Aufnahme eines Ladegutes geeignet ist, die Regalgasse zwischen den Lagerreihen transportschlüssig miteinander verbindet. Damit kann das im Regallager angeordnete Stückgut auf beliebige Abstellplätze im Regallager auf beliebigen Ebenen umgeräumt oder verschoben werden.

Ein hierzu in dem Regallager verwendeter Transportroboter ist bevorzugt so ausgestaltet, dass der Transportroboter mit Hebezeug, das in einer Ausnehmung des Transportroboters in vertikaler Richtung heb- und senkbar angeordnet ist und zur Aufnahme eines Ladegutes geeignet ist, die Regalgasse zwischen den Lagerreihen transportschlüssig miteinander verbindet.

In einer Weiterbildung kann vorgesehen sein, dass die an Hubbändern, Zahnriemen, Seilen oder Kabeln hängende, heb- und senkbare Ladeplattform in ihrer Hubbewegung noch zusätzlich stabilisiert wird, in dem die noch im Transportroboter eingefahrene Ladeplattform an vertikalen Führungsschienen andocken kann. Die Führungsschienen sind in der Nähe des Abladeplatzes oder am Regallager angeordnet und bilden eine vertikale Führungseinrichtung für die Ladeplattform, die somit schwingungs- und versatzfrei ihre Ladung auf einem Abladeplatz abgeben kann.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind. Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:
- Figur 1:: perspektivische Ansicht eines schienengebundenen Transportroboters mit Ladeplattform im Ruhezustand
- Figur 2:: die Draufsicht auf die Anordnung in Richtung des Pfeiles II
- Figur 3:: die Seitenansicht des Transportroboters im Ruhezustand
- Figur 4:: die Seitenansicht des Transportroboters gemäß Figur 3 mit einer teilweise abgesenkten Ladeplattform
- Figur 5:: die perspektivische Ansicht des Transportroboters mit einer vollständig abgesenkten Ladeplattform während des Ladevorganges einer Kiste von einem Ablageplatz
- Figur 6:: die Seitenansicht der Anordnung nach Figur 5
- Figur 7:: eine perspektivische Darstellung eines Regallagers mit einem erfindungsgemäßen Transportroboter und Ladeplattform während der Vereinzelung von Kisten
- Figur 8:: eine Stirnansicht des Transportroboters im Regallager nach Figur 7, wobei neben den Hubbändern nun auch vertikale Führungsschienen verwendet werden
- Figur 9:: die Draufsicht auf den Transportroboter nach Figur 8

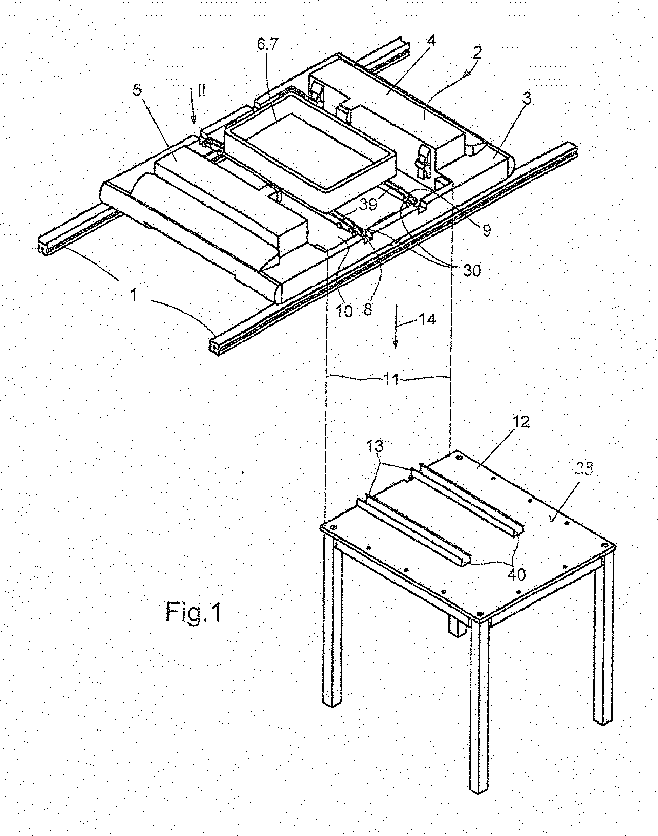

In Figur 1 ist allgemein eine Schienenbahn 1 dargestellt, die aus zwei zueinander beabstandeten und parallel verlaufenden Profilschienen besteht, auf denen ein Transportroboter 2 in Längsrichtung verfahrbar angetrieben ist.

Die Antriebsräder sind nicht dargestellt. Der Transportroboter 2 weist ein Gehäuse 3 auf, welches in seinem Mittenbereich eine Ausnehmung 27 aufweist, in der mit Bewegungsspiel eine heb- und senkbar ausgebildete Ladeplattform 10 angeordnet ist.

Die Ladeplattform ist über ringsum umlaufende Spalten 22 getrennt in der Ausnehmung 27 aufgenommen.

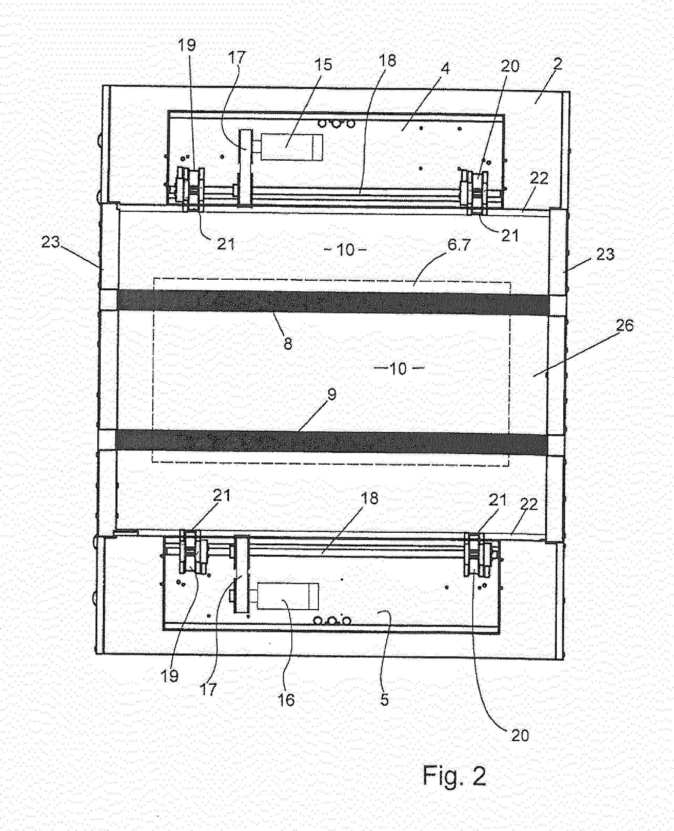

Es sind zwei einander gegenüber liegende Hubantriebskästen 4, 5 vorgesehen, die in Figur 2 näher dargestellt sind.

In jedem Hubantriebskasten 4, 5 ist ein Hubmotor 15, 16 angeordnet, der über einen Antriebsriemen 17 eine Antriebswelle 18 antreibt, die drehfest mit zwei gegenüberliegend angeordneten Wickeltrommeln 19, 20 verbunden ist.

Jeweils ein Hubband 21 ist über jede Wickeltrommel 19, 20 gewickelt.

Bei einem synchronen Antrieb der Hubmotoren 15, 16 wird die Ladeplattform 10 gemäß Figur 1 entlang einer vertikalen Hublinie 11 nach unten in Pfeilrichtung 14 abgesenkt und kann in Gegenüberstellung zu einem Ablageplatz 12 gebracht werden, der eine horizontale (oder schräg geneigte) Ablageebene 29 ausbildet.

Auf der Ablageebene 29 sind zwei zueinander parallele Ablagepaneele 13 befestigt, in deren Hohlprofil 40 die beiden Förderbänder 8, 9 des Längsförderers 30 hinein fahren. Dies erfolgt dadurch, dass gemäß Figur 1 der Längsförderer 30 zwei zueinander parallele Teleskopschlitten 39 aufweist, welche die wirksame Auszugslänge der Förderbänder um das zwei- oder dreifache vergrößern können.

Auf der Ladeplattform 10 ist als Beispiel eines Ladegutes 6 eine Kiste 7 aufgeladen.

Die Ausnehmung 27 wird durch zwei transportroboterfeste Verbindungsrahmen 23 definiert, welche die Ausnehmung 27 seitlich überbrücken und parallel zueinander angeordnet sind.

In der Draufsicht nach Figur 2 ist auf der Ladeplattform 10 lediglich in gestrichelter Darstellung die Kiste 7 gezeigt.

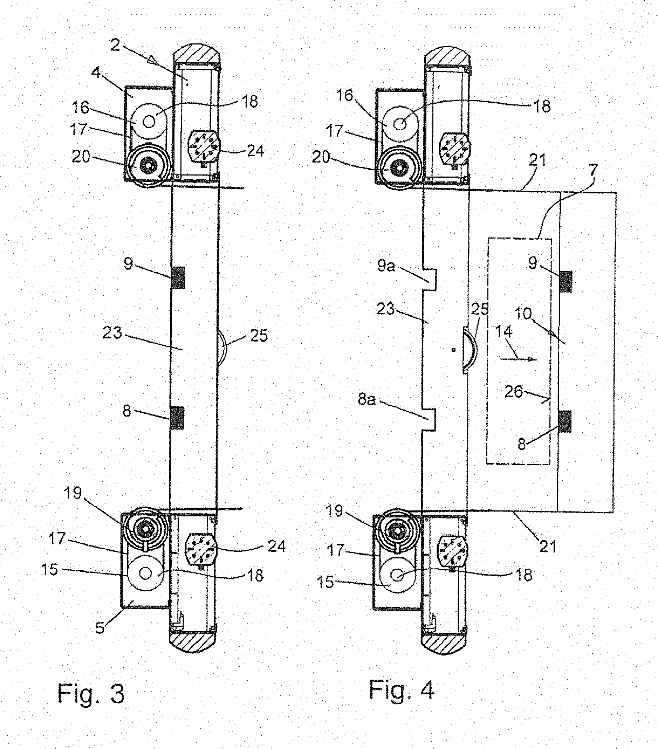

Die Figuren 3 und 4 zeigen zwei verschiedene Hubvorgänge, wobei in Figur 3 der Ausgangszustand dargestellt ist. Es ist lediglich der seitliche Verbindungsrahmen 23 in Seitenansicht gezeigt und ferner noch die Antriebsmotoren 24 für den Fahrantrieb des Transportroboters 2.

Bei einem entsprechenden Hubbefehlt werden die beiden Hubmotoren 15, 16 mit Strom beaufschlagt und treiben die Wickeltrommel 19, 20 an, so dass die an den Hubbändern 21 befestigte Ladeplattform 10 in Pfeilrichtung 14 nach unten abgesenkt wird.

Die Figuren 3 und 4 zeigen noch, dass am seitlichen Rahmen des Transportroboters 2 ein Wegmessrad 25 vorhanden ist, welches die Schienenbahn 1 abtastet, um eine Positionierung des Transportroboters 2 auf der Schienenbahn 1 zu ermöglichen.

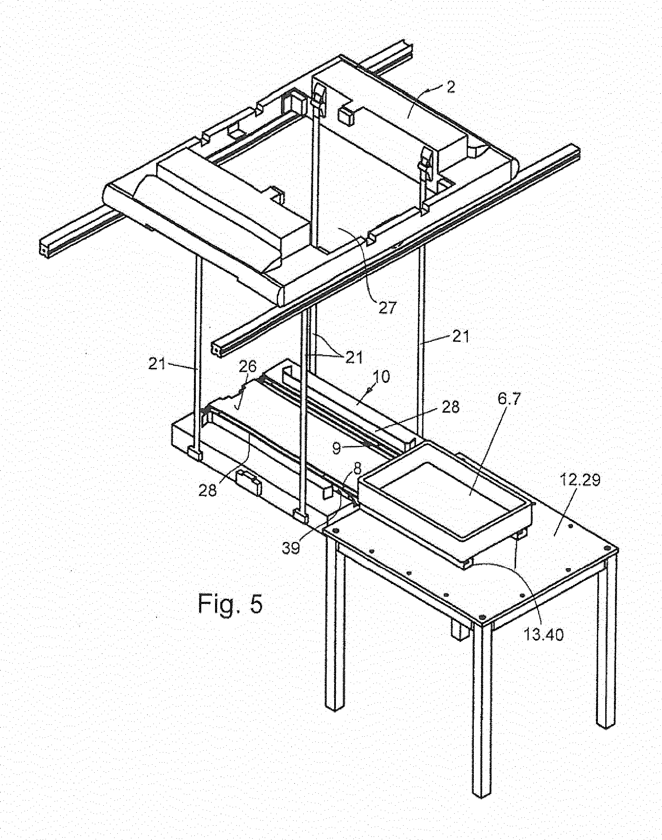

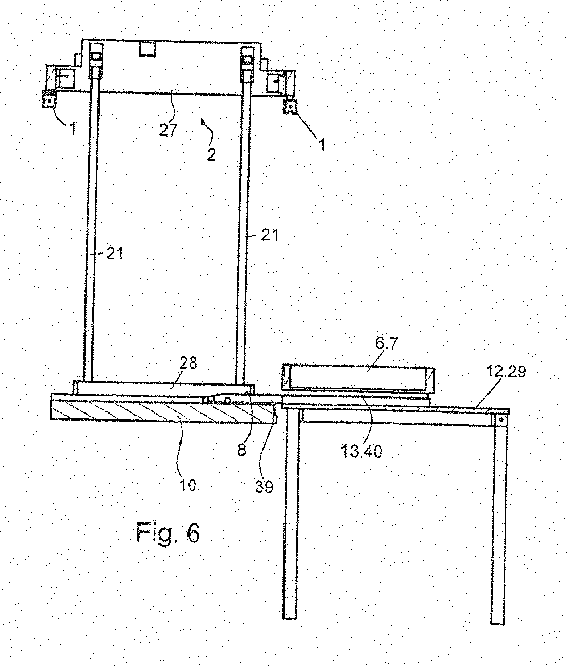

Die Figur 5 zeigt die seitliche Abladung oder Aufladung eines Ladegutes 6 in Form einer Kiste 7. Es ist erkennbar, dass nunmehr die Ladeplattform 10 auf die Ablageebene 29 des Ablageplatzes 12 abgesenkt ist und gemäß Figur 6 fahren die Förderbänder 8, 9, die in einem verschiebbar angetriebenen Längsschlitten angeordnet sind, in die auf dem Ablageplatz 12 angeordneten Ablagepaneele 13 hinein, um so die auf den Ablagepaneelen 13 ruhende Kiste 7 bodenseitig zu untergreifen.

Wenn der als Teleskopschlitten 39 ausgebildete Längsförderer 30 in die Ladeplattform 10 zurückgezogen wird, wird die aufgeladene Kiste 7 auf die Ladeplattform 10 gezogen, wobei Seitenführungen 28 auf der Ladeplattform 10 die seitliche Begrenzung der Ladeebene 26 auf der Ladeplattform 10 bilden.

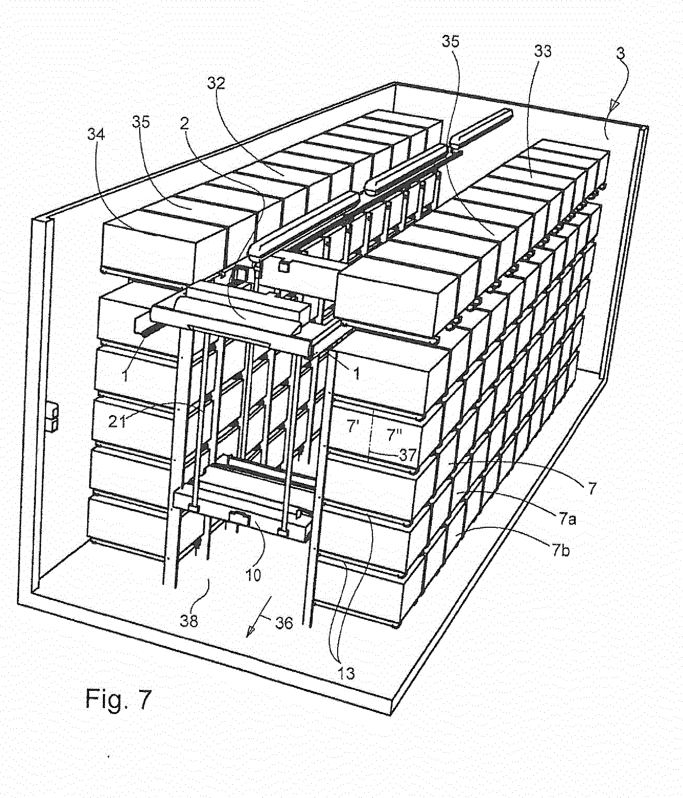

Die Figur 7 zeigt als weiteres Ausführungsbeispiel die Verwendung eines Transportroboters mit der Hubplattform in einem Regallager 31, das aus Lagerreihen 32, 33 und Lagerspalten 34, 35 besteht.

Die dort angeordneten Kisten 7 liegen jeweils auf Ablagepaneelen 13 des Regallagers 31, so dass jede Kiste 7 von der darüber und daneben angeordneten Kiste entlastet ist.

Auf diese Weise ergibt sich die Möglichkeit, dass bei der Bewegung des Transportroboters 2 in der Regalgasse 38 dieser zu jedem beliebigen Zeitpunkt jede beliebige Kiste in jeder beliebigen Lagerreihe und Lagerspalte seitlich untergreifen und auf seine Ladeplattform 10 aufladen oder abladen kann.

Die Figur 7 zeigt auch, dass die Kisten kein ein volles Format haben müssen. Stattdessen können sie auch als längs einer Teilungslinie geteilte Kisten 7, 7', 7" ausgebildet sein.

Der Transportroboter 2 ist somit in den Pfeilrichtungen 36 in der gesamten Regalgasse 38 verfahrbar und er kann an jeder beliebigen Lagerreihe und Lagerspalte 32-35 eine beliebige Kiste seitlich aufnehmen und auf die Ladeplattform 10 aufladen. Danach wird die Ladeplattform 10 bündig auf den Transportroboter 2 hoch gehoben. Danach wird der Transportroboter aus dem Regallager 31 mit der aufgeladenen Kiste 7, 7', 7" heraus gefahren.

Damit ergibt sich ein gedrängter und kompakter Aufbau, denn im Ruhezustand verschwindet das Hubwerkzeug (Ladeplattform 10 mit dem dort angeordneten Längsförderer 30) vollständig im Innenaufbau des Transportroboters 2.

Mit dieser Anordnung können somit auch die Kisten 7, 7a, 7b im Regallager 31 umgeräumt und auf unterschiedlichen Ablageplätzen 12 oder Ablagepaneele 13 abgestellt werden. Der Transportroboter 2 mit seiner heb- und senkbaren Ladeplattform 10, auf der gleichzeitig ein als Teleskopschlitten 39 ausgebildeter Längsförderer 30 angeordnet ist, kann sogar jede beliebige Kiste 7 in der Lagerreihe 32 an jeden beliebigen Ablageplatz in der gegenüberliegenden Lagerreihe 33 verbringen. Dies erfolgt dank der Tatsache, dass die heb- und senkbare Ladeplattform 10 des Transportroboters 2 die durch die Regalgassen 38 getrennten Lagerreihen 32, 33 transportschlüssig miteinander verbindet.

Eine bevorzugte Betriebsweise besteht darin, dass der Transportroboter im Regallager 31 zu einem Ablageplatz 12 fährt und dort die Ladeplattform 10 initialisiert, die mit einer Absenkbewegung auf eine bestimmte Ablageebene fährt und dort das Ladegut (Kiste, Karton oder dgl.) mit dem Längsförderer 30 auf den Ablageplatz 12 abgibt. Wurde das Ladegut erfolgreich abgegeben, fährt die Ladeplattform 10 wieder in ihre Grundposition in den Transportroboter 2 hinein. Diese Grundposition wird durch zwei Mikroschalter oder Induktiv-Sensoren oder Lichtschranke abgefragt. Erst wenn diese die Freigabe erklären, bekommt der Transportroboter die Freigabe zum Fahren.

Falls sich während des Absenkvorgangs der Ladeplattform eine Person unter der Ladeplattform befindet, so wird dies mittels berührungslosen Sicherheitssensors erkannt. Das Signal des Sicherheitssensors wird über Kabel oder Funk zum Transportroboter übertragen. Der Transportroboter bremst und die mechanischen Bremsen fallen ein. Wenn sich die Person aus dem Gefahrenbereich bewegt hat, startet der Transportroboter selbsttätig seine Senk/Hubbewegung.

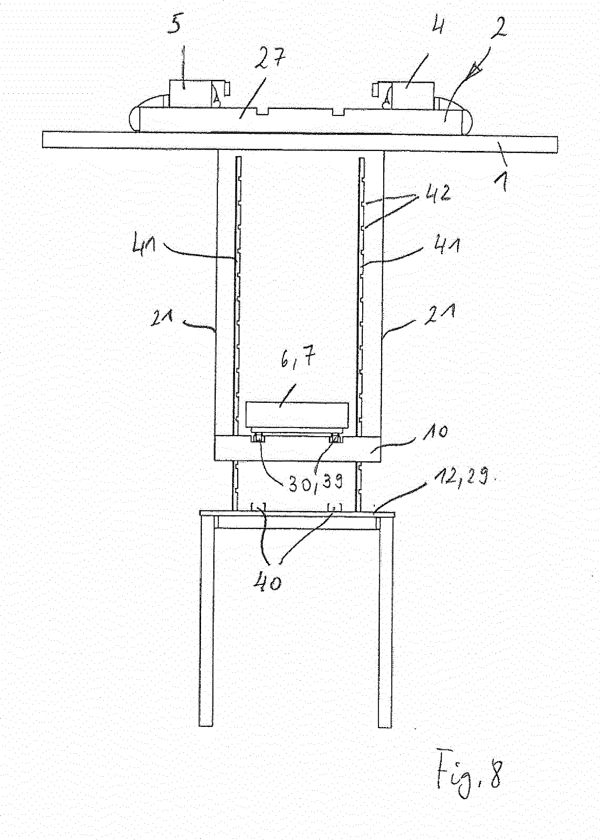

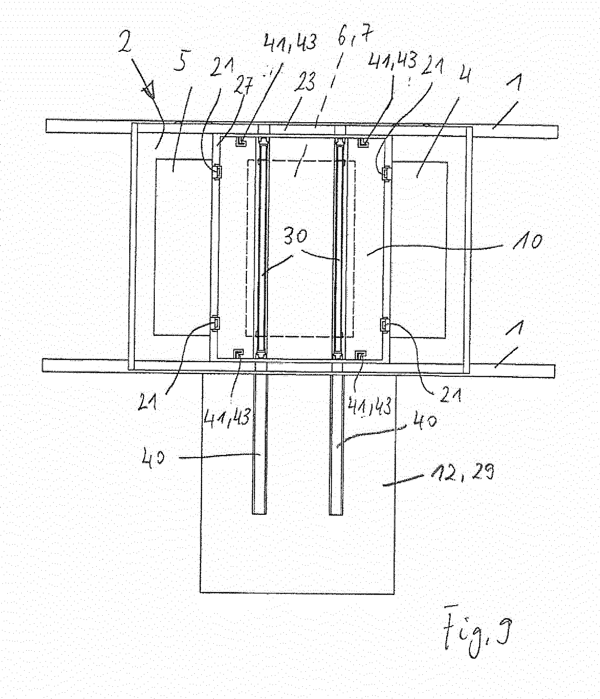

Die Figuren 8 und 9 zeigen eine weitere Ausführung der Erfindung, bei der es bevorzugt wird, wenn neben oder parallel zu den vorher beschriebenen Hubbändern 21 auch vertikale Führungsschienen 41 vorgesehen sind.

Am Beispiel des Ablageplatzes 12, der schematisiert als Tisch dargestellt ist, der aber auch in einem Regallager 31 angeordnet sein könnte, ist erkennbar, dass auf der Ablageebene 29 die horizontal verlaufenden Hohlprofile 40 angeordnet sind, in welche der Längsförderer 30 mit seinen Teleskopschlitten 39 einfährt.

Im gezeigten Ausführungsbeispiel befindet sich die Ladeplattform 10 gerade noch ein kurzes Stück über der Ablageebene 29. Sie ist also noch nicht in ihrer Arbeitsstellung.

Wenn die Ladeplattform 10 weiter in vertikaler Richtung abgelassen wird, steht der Längsförderer 30 mit seinem Teleskopschlitten 39 in fluchtender, horizontaler Gegenüberstellung zu den auf der Ablageebene 29 angeordneten Hohlprofilen.

Sobald diese fluchtende Gegenüberstellung erreicht wird, wird der Teleskopschlitten 39 in Betrieb gesetzt und die Kiste oder das sonstige Ladegut wird auf dem Hohlprofil 40 der Ablageebene 29 aufgeschoben.

Die Figuren 8 und 9 zeigen, dass zur Vermeidung von Schwingungsbewegungen der Ladeplattform während des Ablassens vom Transportroboter 2 noch zusätzlich Führungsschienen 41 vorgesehen werden können, die mit dem Ablageplatz 12 verbunden sind oder die im Regallager 31 (nicht dargestellt) angeordnet sind. Sie sind bevorzugt aus einem Metallmaterial. Das Profil der Führungsschienen ist bevorzugt L-förmig. Es können jedoch auch andere Profilformen, wie ein Rechteck- oder Quadrat- oder Ovalprofil verwendet werden.

Die Führungsschienen 41 reichen mit ihren oberen Enden bis kurz unter die Schienenbahn 1, damit der fahrende Transportroboter nicht mit diesen Enden kollidiert. Sie sind in bestimmter Weise entweder mit dem Erdboden oder mit dem Ablageplatz 12 verbunden. Sie können auch seitlich in Lagerreihen oder Lagerspalten im Regallager 31 befestigt werden.

Die Führungsschienen können aber auch nur bis unmittelbar über den Abgabeplatz reiche, sodass die Hubplattform den größten Teil der Hubbewegung ohne Führung macht und nur kurz vor der Arbeitsebene geführt wird.

Sie dienen der Vermeidung von Schwingungen, die bei der Ladeplattform 10 stattfinden könnten, wenn diese vom Transportroboter 2 abgesenkt wird. Daher wird die Ladeplattformen an den Führungsschienen entlang geführt. Ebenso wird durch die Anordnung von Führungsschienen sichergestellt, dass kein Versatz der Ladeplattform und der auf der Ladeplattform angeordneten Teleskopschlitten 39 zu dem festen Hohlprofil 40 auf der Ablageebene 29 vorliegt.

Zu diesem Zweck sieht die Erfindung in einer Weiterbildung vor, dass gemäß Figur 9 im randseitigen Bereich der Ladeplattform 10 Ausnehmungen 43 angeordnet sind, die etwa dem Profil der L-förmigen Führungsschienen 41 entsprechen.

Die L-förmigen Führungsschienen 41 greifen somit mit Spiel in die Ausnehmungen 43 ein.

Wird die Ladeplattform gemäß Figur 8 aus der Ausnehmung 27 im Transportroboter 2 abgelassen, greifen die oberen Enden der profilierten Führungsschienen 41 gemäß Figur 8 in die L-förmigen Ausnehmungen 43 in der Ladeplattform ein, die somit an den Führungsschienen 41 angedockt wird.

Die Ladeplattform wird dann nach unten abgelassen - siehe Figur 8 - und die Führungsschienen 41 führen die Ladeplattform 10 gerade, verzugs- und schwingungsfrei sowie versatzfrei nach unten.

Es kann noch zusätzlich vorgesehen sein, dass im Bereich der Längserstreckung der Führungsschienen 41 Zahnkerben 42 angeordnet sind, um als Längenmaßstab zu dienen. Damit können bestimmte Absenkhöhen angesteuert werden. Ebenso kann damit eine Feinpositionierung mittels Sensor durchgeführt werden. Diese dient zur genauen Höhen- und/oder Winkeljustierung.

Um die genaue horizontale Ausrichtung der Hubplattform zu gewährleisten, kann zusätzlich ein sogenanntes Gyroskop verwendet werden, das kleinste Winkelfehler bei der Ausrichtung der CPU des Transportroboters meldet und diese dann die entsprechenden Hubmotoren 15, 16 nachregeln kann.

### Zeichnungslegende

- 1: Schienenbahn
- 2: Transportroboter
- 3: Gehäuse
- 4: Hubantriebskasten
- 5: Hubantriebskasten
- 6: Ladegut
- 7: Kiste 7', 7"
- 8: Förderband 8a
- 9: Förderband 9a
- 10: Ladeplattform
- 11: Hublinie
- 12: Ablageplatz
- 13: Ablagepaneel
- 14: Pfeilrichtung
- 15: Hubmotor
- 16: Hubmotor
- 17: Antriebsriemen
- 18: Antriebswelle
- 19: Wickeltrommel
- 20: Wickeltrommel
- 21: Hubband
- 22: Spalt
- 23: Verbindungsrahmen
- 24: Antriebsmotor (von 2)
- 25: Wegmessrad
- 26: Ladeebene
- 27: Ausnehmung (in 2)
- 28: Seitenführung
- 29: Ablageebene (von 12)
- 30: Längsförderer
- 31: Regallager
- 32: Lagerreihe
- 33: Lagerreihe
- 34: Lagerspalte
- 35: Lagerspalte
- 36: Pfeilrichtung
- 37: Teilungslinie
- 38: Regalgasse
- 39: Teleskopschlitten
- 40: Hohlprofil
- 41: Führungsschiene
- 42: Zahnkerbe
- 43: Ausnehmungen

## Patentansprüche

1. Verwendung eines schienengebundenen Transportroboters (2) mit Hebezeug, das in einer Ausnehmung (27) des Transportroboters (2) in vertikaler Richtung heb- und senkbar angeordnet ist und zur Aufnahme eines Ladegutes (6, 7, 7', 7") geeignet ist, wobei das Hebezeug als heb- und senkbar angetriebene Ladeplattform (10) mit mindestens einem darauf angeordneten Längsförderer (8, 9; 8a, 9a; 30) ausgebildet ist, wobei der Längsförderer (30) bezüglich seiner Auszugslänge teleskopierbar ausgebildet ist, **dadurch gekennzeichnet, dass** der Längsförderer (30) zwei parallele und synchronisierte Förderbänder (8, 8a, 9, 9a) umfasst, und dass auf einem Ablageplatz (12) eine Ablageebene (29) für das Ladegut (6, 7, 7', 7") durch zwei zueinander parallele Ablagepaneele (13) gebildet ist, die jeweils ein Hohlprofil (40) ausbilden, in das die Förderbänder (8, 8a, 9, 9a) des Längsförderers (30) längsverschiebbar hinein fahren, und die Bodenseite eines Ladegutes (6, 7, 7', 7") untergreifen.

2. Verwendung eines Transportroboters (2) nach Anspruch 1, **dadurch gekennzeichnet, dass** der teleskopierbare Längsförderer (8, 9; 8a, 9a; 30) seine aktive Auszugslänge im Vergleich zu seiner Länge im Ruhezustand verdoppelt oder verdreifacht.

3. Verwendung eines Transportroboters (2) nach Anspruch 1 oder 2, **dadurch gekennzeichnet, dass** in der Ladeplattform (10) eine um eine horizontale Achse schwenkbare Klappe angeordnet ist, bei deren Öffnung ein auf der Ladeplattform (10) aufgeladenes Schüttgut nach unten abgegeben werden kann.

4. Verwendung eines Transportroboters (2) nach einem der Ansprüche 1 bis 3, **dadurch gekennzeichnet, dass** eine auf dem Transportroboter (2) angeordnete Hubvorrichtung aus zwei zueinander beabstandeten Hubantriebskästen (4, 5) besteht, in denen jeweils ein Hubmotor (15, 16) angeordnet ist, der jeweils eine Antriebswelle (18) antreibt, an deren beiden Enden jeweils eine Wickeltrommel (19, 20) für die Auf- und Abwicklung eines Hubbandes (21) angeordnet ist, deren anderes Ende an der Ladeplattform (10) befestigt ist.

5. Verwendung eines Transportroboters (2) nach einem der Ansprüche 1 bis 4, **dadurch gekennzeichnet, dass** die Ladeplattform (10) im Ruhezustand annähernd bodeneben in der Ausnehmung (27) des Transportroboters (2) gelagert ist.

6. Verwendung eines Transportroboters (2) nach einem der Ansprüche 1 bis 5, **dadurch gekennzeichnet, dass** der Transportroboter (2) in den Regalgassen (38) eines Regallagers (31) verfahrbar ist, in dem spalten- und reihenweise übereinander gestapelte Kisten (7, 7', 7") oder anders artiges Stückgut gelagert ist.

7. Verwendung eines Transportroboters (2) nach einem der Ansprüche 1 bis 6, **dadurch gekennzeichnet, dass** eine elektrische Verbindung zwischen dem Transportroboter (2) und der Ladeplattform (10) vorgesehen ist, die leitungsgebunden und/oder funkgestützt ausgebildet ist.

8. Verwendung eines Transportroboters (2) nach einem der Ansprüche 1 bis 7, **dadurch gekennzeichnet, dass** die Ladeplattform (10) mit vertikalen Führungsschienen (41) koppelbar ist, welche am Ablageplatz (12) und/oder am Regallager (31) angeordnet sind.

9. Verwendung eines Transportroboters (2) nach Anspruch 8, **dadurch gekennzeichnet, dass** in die Führungsschienen (41) die Ladeplattform (10) einhängbar ist und dass die Führungsschienen (41) die Hubbewegung der Ladeplattform (10) leiten.

10. Regallager (31) bestehend aus im Abstand voneinander angeordneten Lagerreihen (32, 33) und dazwischen angeordneten Regalgassen (38), wobei in den Lagerreihen (32, 33) eine Vielzahl von Lagerspalten (34, 35) definiert sind und eine Vielzahl von Ablageplätzen (12) für Ladegut (6), insbesondere Kisten (7,7a, 7b), bilden, wobei ein schienengebundener Transportroboter mit Hebezeug (4 ,5 ,10), das in einer Ausnehmung (27) des Transportroboters (2) in vertikaler Richtung heb- und senkbar angeordnet ist und zur Aufnahme eines Ladegutes (6, 7, 7', 7") geeignet ist und die Regalgasse (38) zwischen den Lagerreihen (32, 33) transportschlüssig miteinander verbindet, wobei das Hebezeug als heb- und senkbar angetriebene Ladeplattform (10) mit mindestens einem darauf angeordneten Längsförderer (8, 9; 8a, 9a; 30) ausgebildet ist, **dadurch gekennzeichnet, dass** der Längsförderer zwei parallele und synchronisierte Förderbänder umfasst, und dass auf einem Ablageplatz (12) eine Ablageebene (29) für das Ladegut durch zwei zueinander parallele Ablagepaneele (13) gebildet ist, die jeweils ein Hohlprofil (40) ausbilden, in das die Förderbänder (8, 9) des Längsförderers (30) längsverschiebbar eingreifen und die Bodenseite eines Ladegutes untergreifen.

11. Regallager (31) nach Anspruch 10, **dadurch gekennzeichnet, dass** der Längsförderer (8, 9; 8a, 9a; 30) bezüglich seiner Auszugslänge teleskopierbar ausgebildet ist und seine aktive Auszugslänge im Vergleich zu seiner Länge im Ruhezustand verdoppelt oder verdreifacht.

12. Regallager (31) nach Anspruch 10 oder 11, **dadurch gekennzeichnet, dass** die Ladeplattform (10) mit vertikalen Führungsschienen (41) koppelbar ist, welche am Ablageplatz (12) und/oder am Regallager (31) angeordnet sind.

## Claims

1. Use of a rail-mounted transport robot (2) with lifting gear which is arranged so it can be raised and lowered in a vertical direction in a recess (27) of the transport robot (2) and is suitable for receiving a load (6, 7, 7', 7"), wherein the lifting gear is designed as a loading platform (10) driven so it can be raised and lowered with at least one longitudinal conveyer (8, 9; 8a, 9a; 30) arranged thereon, wherein the longitudinal conveyer (30) is designed so it can be telescoped with regard to its extension length, **characterised in that** the longitudinal conveyer (30) comprises two parallel and synchronised conveyer belts (8, 8a, 9, 9a), and **in that** on a shelf space (12) a shelf plane (29) for the load (6, 7, 7', 7") is formed by two shelf panels (13) parallel to one another which respectively form a hollow profile (40) into which the conveyer belts (8, 8a, 9, 9a) of the longitudinal conveyer (30) move in a longitudinally displaceable manner and grip below the floor side of a load (6, 7, 7', 7").

2. Use of a transport robot (2) according to claim 1, **characterised in that** the longitudinal conveyer (8, 9; 8a, 9a; 30) which can be telescoped doubles or triples its active extension length compared to its length in the rest state.

3. Use of a transport robot (2) according to claim 1 or 2, **characterised in that** in the loading platform (10) is arranged a flap pivotable about a horizontal axis, through the opening of which bulk material loaded on the loading platform (10) may be released downwards.

4. Use of a transport robot (2) according to one of claims 1 to 3, **characterised in that** a lifting device arranged on the transport robot (2) consists of two lift drive gearboxes (4, 5) spaced from one another, in which respectively a lift motor (15, 16) is arranged which respectively drives a drive shaft (18), on both ends of which respectively a winding drum (19, 20) for winding and unwinding a lifting belt (21) is arranged, the other end of which is attached to the loading platform (10).

5. Use of a transport robot (2) according to one of claims 1 to 4, **characterised in that** the loading platform (10) in the rest state is mounted in the recess (27) of the transport robot (2) to be approximately even with the floor.

6. Use of a transport robot (2) according to one of claims 1 to 5, **characterised in that** the transport robot (2) can be moved in the shelf aisles (38) of shelved storage (31), in which crates (7, 7', 7") stacked one above another in columns and rows or another type of piece good is mounted.

7. Use of a transport robot (2) according to one of claims 1 to 6, **characterised in that** an electrical connection is provided between the transport robot (2) and the loading platform (10) which is designed to be lead-connected and/or radio-assisted.

8. Use of a transport robot (2) according to one of claims 1 to 7, **characterised in that** the loading platform (10) can be coupled to vertical guide rails (41) which are arranged on the shelf space (12) and/or on the shelved storage (31).

9. Use of a transport robot (2) according to claim 8, **characterised in that** the loading platform (10) can be hung in the guide rails (41) and **in that** the guide rails (41) conduct the lifting movement of the loading platform (10).

10. Shelved storage (31) consisting of storage rows (32, 33) arranged at a distance from one another and shelf aisles (38) arranged therebetween, wherein a plurality of storage columns (34, 35) are defined in the storage rows (32, 33) and form a plurality of shelf spaces (12) for loads (6), in particular crates (7, 7a, 7b), wherein a rail-mounted transport robot with lifting gear (4, 5, 10) is arranged so it can be raised and lowered in vertical direction in a recess (27) of the transport robot (2) and is suitable for receiving a load (6, 7, 7', 7") and connects the shelf aisles (38) between the storage rows (32, 33) to one another ready for transport, wherein the lifting gear is designed as a loading platform (10) driven so it can be raised and lowered with at least one longitudinal conveyer (8, 9; 8a, 9a; 30) arranged thereon, **characterised in that** the longitudinal conveyer comprises two parallel and synchronised conveyer belts, and **in that** on a shelf space (12) a shelf plane (29) for the load is formed by two shelf panels (13) parallel to one another which respectively form a hollow profile (40) into which the conveyer belts (8, 9) of the longitudinal conveyer (30) engage in longitudinally displaceable manner and grip below the floor side of a load.

11. Shelved storage (31) according to claim 10, **characterised in that** the longitudinal conveyer (8, 9; 8a, 9a; 30) is designed so it can be telescoped with regard to its extension length and doubles or triples its active extension length compared to its length in the rest state.

12. Shelved storage (31) according to claim 10 or 11, **characterised in that** the loading platform (10) can be coupled to vertical guide rails (41) which are arranged on the shelf space (12) and/or on the shelved storage (31).

## Revendications

1. Utilisation d'un robot de transport (2) sur rail avec un engin de levage qui est disposé dans un évidement (27) du robot de transport (2) de manière à pouvoir être levé et baissé dans la direction verticale et est adapté pour la réception d'une charge (6, 7, 7', 7"), dans laquelle l'engin de levage est réalisé en tant que plateforme de chargement (10) entraînée de manière à pouvoir être levée et baissée avec au moins un convoyeur longitudinal (8, 9 ; 8a, 9a ; 30) disposé dessus, dans laquelle le convoyeur longitudinal (30) est réalisé de manière télescopique en ce qui concerne sa longueur d'extraction, **caractérisée en ce que** le convoyeur longitudinal (30) comprend deux bandes de convoyage (8, 8a, 9, 9a) parallèles et synchronisées, et qu'un plan de dépôt (29) pour la charge (6, 7, 7', 7") est formé sur un poste de dépôt (12) par deux panneaux de dépôt (13) parallèles l'un à l'autre qui réalisent chacun un profil creux (40) dans lequel les bandes de convoyage (8, 8a, 9, 9a) du convoyeur longitudinal (30) entrent de manière coulissante longitudinalement et viennent en prise sous la face inférieure d'une charge (6, 7, 7', 7").

2. Utilisation d'un robot de transport (2) selon la revendication 1, **caractérisée en ce que** le convoyeur longitudinal (8, 9 ; 8a, 9a ; 30) télescopique double ou triple sa longueur d'extraction active en comparaison de sa longueur dans l'état de repos.

3. Utilisation d'un robot de transport (2) selon la revendication 1 ou 2, **caractérisée en ce qu'**un clapet pouvant pivoter autour d'un axe horizontal est disposé dans la plateforme de chargement (10), à l'ouverture duquel un produit en vrac chargé sur la plateforme de chargement (10) peut être distribué vers le bas.

4. Utilisation d'un robot de transport (2) selon l'une des revendications 1 à 3, **caractérisée en ce qu'**un dispositif de levage disposé sur le robot de transport (2) est constitué de deux caissons d'entraînement de levage (4, 5) espacés l'un de l'autre dans chacun desquels est disposé un moteur de levage (15, 16) qui entraîne un arbre d'entraînement (18) respectif sur les deux extrémités duquel est disposé un tambour d'enroulement (19, 20) respectif pour l'enroulement et le déroulement d'une bande de levage (21) dont l'autre extrémité est fixée à la plateforme de chargement (10).

5. Utilisation d'un robot de transport (2) selon l'une des revendications 1 à 4, **caractérisée en ce que** dans l'état de repos, la plateforme de chargement (10) est logée approximativement au ras du sol dans l'évidement (27) du robot de transport (2).

6. Utilisation d'un robot de transport (2) selon l'une des revendications 1 à 5, **caractérisée en ce que** le robot de transport (2) est déplaçable dans les allées de rayonnage (38) d'un entrepôt à rayonnage (31) dans lequel est stocké des caissons (7, 7', 7") empilés les uns sur les autres en colonne et en rang ou une marchandise de détail d'un genre différent.

7. Utilisation d'un robot de transport (2) selon l'une des revendications 1 à 6, **caractérisée en ce qu'**une liaison électrique entre le robot de transport (2) et la plateforme de chargement (10) est prévue, lequel est réalisée de manière filaire et/ou par ondes radio.

8. Utilisation d'un robot de transport (2) selon l'une des revendications 1 à 7, **caractérisée en ce que** la plateforme de chargement (10) peut être couplée à des rails de guidage verticaux (41), lesquels sont disposés sur le poste de dépôt (12) et/ou sur l'entrepôt à rayonnage (31).

9. Utilisation d'un robot de transport (2) selon la revendication 8, **caractérisée en ce que** la plateforme de chargement (10) peut être suspendue dans les rails de guidage (41) et que les rails de guidage (41) dirigent le mouvement de levage de la plateforme de chargement (10) .

10. Entrepôt à rayonnage (31) constitué de rangées de stockage (32, 33) disposées à distance les unes des autres et d'allées de rayonnage (38) disposées entre celles-ci, dans lequel une pluralité de colonnes de stockage (34, 35) sont définies dans les rangées de stockage (32, 33) et forment une pluralité de postes de dépôt (12) pour la charge (6), en particulier des caissons (7, 7a, 7b), dans lequel un robot de transport sur rail avec un engin de levage (4, 5, 10) qui est disposé dans un évidement (27) du robot de transport (2) de manière à pouvoir être levé et baissé dans la direction verticale et est adapté pour la réception d'un produit chargé (6, 7, 7', 7") et relie l'allée de rayonnage (38) entre les rangées de stockage (32, 33) les unes aux autres par transport, dans lequel l'engin de levage est réalisé en tant que plateforme de chargement (10) entraînée de manière à pouvoir être levée et baissée avec au moins un convoyeur longitudinal (8, 9 ; 8a, 9a ; 30) disposé dessus, **caractérisé en ce que** le convoyeur longitudinal comprend deux bandes de convoyage parallèles et synchronisées, et qu'un plan de dépôt (29) pour la charge est formé par deux panneaux de dépôt (13) parallèles l'un à l'autre sur un poste de dépôt (12) qui réalisent chacun un profil creux (40) dans lequel les bandes de convoyage (8, 9) du convoyeur longitudinal (30) viennent en prise de manière coulissante longitudinalement et viennent en prise sous la face inférieure d'une charge.

11. Entrepôt à rayonnage (31) selon la revendication 10, **caractérisé en ce que** le convoyeur longitudinal (8, 9 ; 8a, 9a ; 30) est réalisé de manière télescopique en ce qui concerne sa longueur d'extraction et double ou triple sa longueur d'extraction active en comparaison de sa longueur dans l'état de repos.

12. Entrepôt à rayonnage (31) selon la revendication 10 ou 11, **caractérisé en ce que** la plateforme de chargement (10) peut être couplée à des rails de guidage verticaux (41), lesquels sont disposés sur le poste de dépôt (12) et/ou sur l'entrepôt à rayonnage (31).
